# EUROPEAN PATENT APPLICATION

(11) **EP 4 588 329 A1**
(43) Date of publication of application: **23.07.2025**
(21) Application number: 25152335.3
(22) Date of filing: 16.01.2025
(51) Int. Cl.: A01D 34/82, B62D 1/02, A01D 34/00, A01D 34/66

(54) **CONVERTING USER INPUTS ON A LAWNMOWER**

(30) Priority: 16.01.2024 US 202463621283 P
(71) Applicant: Techtronic Cordless GP, Anderson, SC 29621 (US)
(72) Inventor: CARR, Michael, Anderson, 29621 (US); VARGAS, Fernando, Anderson, 29621 (US); FAROOQUI, Shehzaan, Anderson, 29621 (US); LAMBERT, Matt, Anderson, 29621 (US); KONDRO, Grzegorz, Anderson, 29621 (US); GIVENS, Robert, Anderson, 29621 (US); HOOD, Adam, Anderson, 29621 (US); MIKA, Nikolas, Anderson, 29621 (US); BREWSTER, Tim, Anderson, 29621 (US); LANE, Ernest, Anderson, 29621 (US); DILELLA, Jesse, Anderson, 29621 (US); RAY, Tommy, Anderson, 29621 (US)
(74) Representative: Zimmermann & Partner Patentanwälte mbB

(57) **Abstract**

A riding lawnmower including: a frame; a seat supported by the frame; a cutting implement supported by the frame, the cutting implement driven by a cutting implement motor; a wheel rotatably driven by a wheel motor; a controller in electrical communication with the wheel motor to control operation of the wheel motor; a wiring harness defining a user input connector, wherein the wiring harness is in electrical communication with the controller; a user input movable in at least one direction, wherein the user input receives input from a user to affect steering control of the riding lawnmower, wherein the user input is swappable between at least two different types of user inputs, and wherein the controller is configured to self-configure between the at least two different types of user inputs.

## Description

### CROSS-REFERENCE TO RELATED APPLICATIONS

The present application claims priority to U.S. Provisional Patent Application Serial No. 63/621,283 filed on January 16, 2024, the disclosure of which is incorporated by reference herein in its entirety.

### FIELD

The present disclosure relates generally to converting between different types of user inputs for vehicles, and more particularly to converting between different types of user inputs for lawn maintenance vehicles, such as lawnmowers.

### BACKGROUND

Lawn maintenance is typically performed using power tools that are controlled by a user. One example of a power tool is a riding lawnmower. Riding lawnmowers typically have control systems including a steering controller that allows a user to control movement of the riding lawnmower by manipulating one or more user inputs. By way of example, the user inputs may include one or more lap bars pivotable about at least one axis (e.g., between a forward position and a rear position), a joystick, a steering wheel, one or more floor pedals, or the like.

Some users prefer the experience of using lap bars to control movement of the riding lawnmower while other users prefer joysticks, steering wheels, floor pedals, or other types of user inputs. However, riding lawnmowers are traditionally equipped with a single type of user input, thus disallowing customization based on user preference.

### BRIEF DESCRIPTION

Improved systems and components for steering control are desired in the art. In particular, lawn maintenance vehicles having convertible (swappable) user inputs that allow a user to easily convert between different steering control types would be advantageous.

Aspects and advantages of the invention in accordance with the present disclosure will be set forth in part in the following description, or may be obvious from the description, or may be learned through practice of the technology.

In accordance with one embodiment, a riding lawnmower is provided. The riding lawnmower includes a frame; a seat supported by the frame; a cutting implement supported by the frame, the cutting implement driven by a cutting implement motor; a wheel rotatably driven by a wheel motor; a controller in electrical communication with the wheel motor to control operation of the wheel motor; a wiring harness defining a user input connector, wherein the wiring harness is in electrical communication with the controller; a user input movable in at least one direction, wherein the user input receives input from a user to affect steering control of the riding lawnmower, wherein the user input is swappable between at least two different types of user inputs, and wherein the controller is configured to self-configure between the at least two different types of user inputs.

In accordance with another embodiment, a method of retrofitting a lawnmower between a plurality of different user inputs is provided. The method includes removing a cover of the lawnmower to expose an opening such that an existing user input currently coupled to the lawnmower is accessible through the opening; physically uncoupling the existing user input from the lawnmower; electrically uncoupling a connector of the existing user input from a user input connector associated with a wire harness of the lawnmower; physically coupling a new user input to the lawnmower; and electrically coupling the new user input to the lawnmower by connecting a connector of the new user input to the user input connector.

In accordance with another embodiment, a plurality of swappable user inputs each configured to be separately coupled to a riding lawnmower to affect steering control of the riding lawnmower is provided. The plurality of swappable user inputs comprises at least two different types of user inputs. Each of the plurality of swappable user inputs comprises: an engagement feature to removably secure the user input to the riding lawnmower; a control implement which receives an input from a user riding on the riding lawnmower; a sensor that detects a state of the control implement; and a connector in electrical communication with the sensor to transmit detected information from the sensor to a wiring harness of the riding lawnmower, wherein the connector is configured to be removably installable at the wiring harness, and wherein each of the different types of user inputs has a different type of connector such that a controller of the riding lawnmower is able to self-configure to control the riding lawnmower based on the connector type installed at the wiring harness.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

The detailed description that follows makes reference to the appended figures, in which:
FIG. 1 is a perspective view of a lawnmower including a plurality of lap bars in accordance with embodiments of the present disclosure;
FIG. 2 is a perspective view of the lawnmower including a joystick in accordance with embodiments of the present disclosure;
FIG. 3 is a top perspective view of the lawnmower with a portion of a faring of the lawnmower removed in accordance with embodiments of the present disclosure;
FIG. 4 is a lower perspective view of the lawnmower with a portion of a faring of the lawnmower removed in accordance with embodiments of the present disclosure;
FIG. 5 is a view of a control subunit of a lap bar of the lawnmower in accordance with embodiments of the present disclosure;
FIG. 6 is a perspective view of a portion of the lawnmower illustrating the control subunit being removed from the lawnmower in accordance with embodiments of the present disclosure;
FIG. 7 is a perspective view of a joystick in accordance with embodiments of the present disclosure;
FIG. 8 is a side view of a lawnmower receiving the joystick in accordance with embodiments of the present disclosure;
FIG. 9 is a side view of a portion of the lawnmower with the joystick coupled to a frame of the lawnmower in accordance with embodiments of the present disclosure;
FIG. 10 is a perspective view of a faring for covering the joystick in accordance with embodiments of the present disclosure;
FIG. 11 is a top perspective view of the lawnmower with the portion of the faring being replaced on the lawnmower in accordance with embodiments of the present disclosure;
FIG. 12 is a schematic of a wiring harness arrangement with lap bars in accordance with embodiments of the present disclosure; and
FIG. 13 is a schematic of the wiring harness arrangement with the joystick in accordance with embodiments of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the disclosure.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Typically, lawnmowers are assembled at a manufacturing facility to include a hardwired user input, such as a lap bar, a joystick, a steering wheel, or the like. While the manufacturer may configure similar-bodied lawnmowers with different types of user inputs at the time of assembly, the lawnmowers are not able to be later-customized or adjusted by a user to use different types of user inputs. That is, users are required to use their original user input and cannot retrofit their lawnmower between different types of user inputs. For recreational users and first-time lawnmower purchasers, this presents a problem since each lawnmower steering control input system is particularly suitable for a different type of user operating style. Some users may prefer lap bars while other users prefer a joystick. Yet other users may prefer a steering wheel. It is not uncommon for first-time lawnmower purchasers to not yet fully understand their preferred operating style. Over time, the user may come to prefer a different type of user input from that originally purchased or a second purchaser may prefer a different user input when the mower is resold. However, traditional lawnmowers do not allow the user to easily and readily swap between the different types of user inputs, forcing the user to continue riding using a less-than-preferred operating style or purchasing a new lawnmower.

Systems and methods described herein allow a user to customize lawnmower controls between multiple types of user inputs. More particularly, the lawnmower may be converted, e.g., retrofit after assembly, between different types of user inputs, such as between lap bars, joysticks, steering wheels, and the like. The lawnmower may include one or more features which allow a user to easily access components of an existing (installed) user input, swap the components of the existing input with components of a desired (new) replacement user input, and intelligently complete the conversion such that the lawnmower automatically identifies information associated with the new user input. For example, a controller of the lawnmower can recognize information associated with the detected user input and automatically adjust operation of the lawnmower in response thereto, i.e., self-configure.

In some implementations, the user input can be selectable between a plurality of different types of user inputs. Each type of user input is self-contained, including a connector which interfaces with a wiring harness of the lawnmower to transmit detected user inputs to the lawnmower controller. The connector may further transmit power from the lawnmower, and more particularly from a power source of the lawnmower such as a battery, to the user input to power electronics of the user input, such as a sensor of the user input.

In some implementations, the controller can recognize the type of user input connected to the wiring harness, e.g., based on pin count, physical layout, or both. The controller can include memory storing reference material, such as a lookup table, that, based on the recognized type of user input, allows a processor of the controller to automatically configure operation of the lawnmower based on the user input type. For example, sensed displacement signals associated with movement of a joystick may be different from sensed displacement signals from a lap bar. The controller can automatically account for these and other differences based on the recognized type of user input.

Self-configuration may occur automatically, for example, upon startup of the lawnmower. For example, an initiation sequence that occurs in response to user-initiated startup may include querying the user input by transmitting a test signal to a user input connector of the wiring harness. Based on the response, the controller can self-configure to accommodate the detected user input. Alternatively, the controller may not need to transmit a test signal. Instead, the controller can detect whether a circuit associated with connector(s) is open or closed. In some instances, the controller may determine the type of user input based on an initial received signal from a sensor associated with the user input, such as for example, when a user first moves a control implement of the user input. In yet other implementations, the user may be required to notify the controller of the presence of a new type of user input. In response to receiving the user notification, the controller can query the user input or await a received signal from the sensor to determine type.

In some implementations, the controller can cause the new user input to calibrate. For example, the controller may determine the presence of the new user input. The controller can then notify the user to perform a calibration operation. The calibration operation may include moving control implement(s) of the user input over a range of motion, such as between and/or about end ranges of travel, to determine an allotted range of motion. The controller can then calibrate the user input based on the allotted range of motion. Once calibration is completed, further movement of the control implement(s) causes movement of the lawnmower.

In some implementations, the different types of swappable user inputs are installed and/or removed from the lawnmower using relatively different installation/removal protocols. For example, one type of user input may be installed/removed using a first protocol and another type of user input may be installed/removed using a second protocol different from the first protocol. The different protocols may include different orders of steps, different installation locations, or both. By way of example, a first type of user input (e.g., a joystick) may be installed by translation in a generally vertical direction from a top of the lawnmower in a downward direction. A second type of user input (e.g., a lap bar) may be installed by roto-translation in a direction from a bottom and/or side of the lawnmower in a generally upward direction. Both the first and second user inputs may extend through the same opening in a faring of the lawnmower but are installed from opposite sides thereof. Despite their different installation protocols, both the first and second user inputs may be secured at the same engagement features of the lawnmower. For example, each of the first and second user inputs can be coupled to a frame of the lawnmower using threaded fasteners extending into the same threaded bores. Similarly, the first and second user inputs each include a connector that is received and electrically coupled to the same connector of the wiring harness of the lawnmower. That is, one wiring harness connector can interface with a plurality of different types of user inputs without requiring an adapter or rewiring of the existing connector.

Once installed, the user input may be accessed through an opening in the lawnmower. The opening can be formed in the frame and/or a faring and can pass from the external environment to an internal cavity in which the user input is installed to permit a user to easily reach the user input. In some implementations, the opening is sized such that the user can reach one or even two arms into the internal cavity. A cover may selectively close the opening to prevent ingress of contaminants during use of the lawnmower. The cover may be formed from a portion of the faring, such as from a wheel faring. Alternatively, the cover may include a hinged portion that swings open and closed. In an embodiment, the opening is arranged relative to the engagement features (such as the threaded bores) such that a tool (e.g., a screwdriver or wrench) can be extended into the opening to reach heads of the threaded fasteners associated with each of the engagement features.

The lawnmower described herein is a riding or standing lawnmower, including a frame supporting a seat and a mowing deck housing a cutting implement. Whereas walking lawnmowers, such as push lawnmowers and self-propelled lawnmowers, are easy to work on and modify, riding lawnmowers include significant structural features to support rider weight, larger cutting areas, and the accompanying power source for extended use. As such, it is difficult to access internal volumes of riding lawnmowers. Use of the above-described opening allows the user to reach into the lawnmower from outside without having to jack the lawnmower to come from underneath and, optionally, without having to remove the mowing deck. That is, the opening acts as an access hatch for user service and retrofitting of the user input.

Where the lawnmower is configurable with lap bars as described herein, the lawnmower can include two openings, one on each side of the lawnmower, to permit access to left and right cavities each configured to receive one of the lap bars. In some implementations, a top faring of the lawnmower can include a punch-out segment which permits a user to cover the cavity of the unused side when a second user input (i.e., the second lap bar) is not present. The punch-out segment can include, for example, a cup holder, a wireless charger, a display, an enclosable storage area, a battery receiving area (optionally including a battery wiring connector), or the like. Thus, when the second user input is not present, the area associated with the second user input can provide functional value.

Each of the different types of user inputs can be self-contained. That is, other than physically coupling the user input to the lawnmower, e.g., at the frame, and electrically coupling the connector of the user input to the wiring harness of the lawnmower, no further mechanical connection is required to complete installation. In this regard, the user can easily connect and disconnect the user inputs for swapping. In some implementations and/or for certain types of user inputs, a damping system can be employed by the user input to minimize noise, vibration, and harshness (NVH). The damping system may be fully self-contained by the user input such that the user is not required to act on any portion of the damping system during installation or removal. Instead, the damping system can be supported internally by the user input. For example, where the damping system includes a piston damper, both ends of the damper can be coupled internally to the user input.

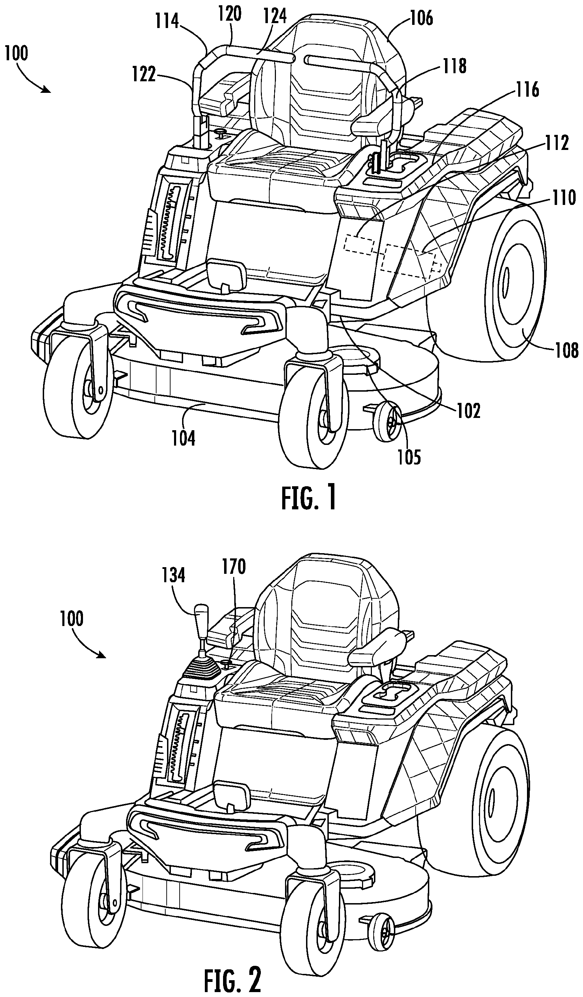

Referring now to the drawings, FIG. 1 illustrates a lawnmower 100 in accordance with an embodiment. The lawnmower 100 generally includes a frame 102 supporting a mowing deck 104. The mowing deck 104 can house one or more cutting implements which, when powered by one or more cutting implement motors 105, e.g., associated with the mowing deck 104, allow the lawnmower 100 to cut vegetation, such as grass as the lawnmower 100 travels thereover. A seat 106 is supported by the frame 102 to allow a user to ride the lawnmower 100. A plurality of wheels 108 support the frame 102 and allow the lawnmower 100 to move over an underlying ground surface. At least one of the wheels 108 can be driven, e.g., by one or more onboard motive sources, such as one or more wheel motors 110 coupled to energy sources, such as batteries.

The motor(s) 110 are in communication, directly or indirectly, with a controller 112. The controller 112 receives signals corresponding to inputs from one or more user inputs and generates control instructions which are communicated to the motor(s) 110. Control of the lawnmower 100, e.g., speed and direction, is based on relative rotational output speed(s) of the motor(s) 110. Where one wheel 108 is driven faster than another wheel 108, the lawnmower 100 turns. Conversely, where all driven wheels 108 are driven at the same speed, the lawnmower 100 can track in a generally straight line. Control of the lawnmower 100 may also, or alternatively, be based on one or more steerable wheels 108 that are steered, e.g., in response to inputs received at the controller 112 from the user input(s).

In an embodiment, the controller 112 includes one or more processors and a memory. The processor(s) can be any suitable processing device (e.g., a control circuitry, a processor core, a microprocessor, an application specific integrated circuit, a field programmable gate array, a controller, a microcontroller, etc.) and can be one processor or a plurality of processors that are operatively connected. The memory can include one or more non-transitory computer-readable storage media, such as RAM, ROM, EEPROM, EPROM, one or more memory devices, flash memory devices, etc., and combinations thereof. The memory can store information that can be accessed by the processor(s). For instance, the memory (e.g., one or more non-transitory computer-readable storage mediums, memory devices) can include computer-readable instructions that can be executed by the processor(s). The instructions can be software, firmware, or both written in any suitable programming language or can be implemented in firmware or hardware. Additionally, or alternatively, the instructions can be executed in logically and/or virtually separate threads on processor(s). For example, the memory can store instructions that when executed by the processor(s) cause the processor(s) to perform operations such as any of the operations and functions as described herein. In some implementations, the controller 112 includes a single control module including the processor(s) and memory housed in a single shell. In other implementations, the controller 112 includes a plurality of control modules. For example, the controller 112 can include a first control module associated with a motor 110 of a first wheel 108 and a second control module associated with a motor 110 of a second wheel 108. The control modules can communicate with one another, have a primary/secondary relationship with one another, operate independently from each other, or any combination thereof.

The user input(s) can each include a control implement, such as for example, a lap bar, a joystick, a steering wheel, a pedal, a throttle, a dial or button, or another type of user input. FIG. 1 illustrates the user input as a plurality of lap bars 114. FIG. 2 illustrates the user input as a joystick 134.

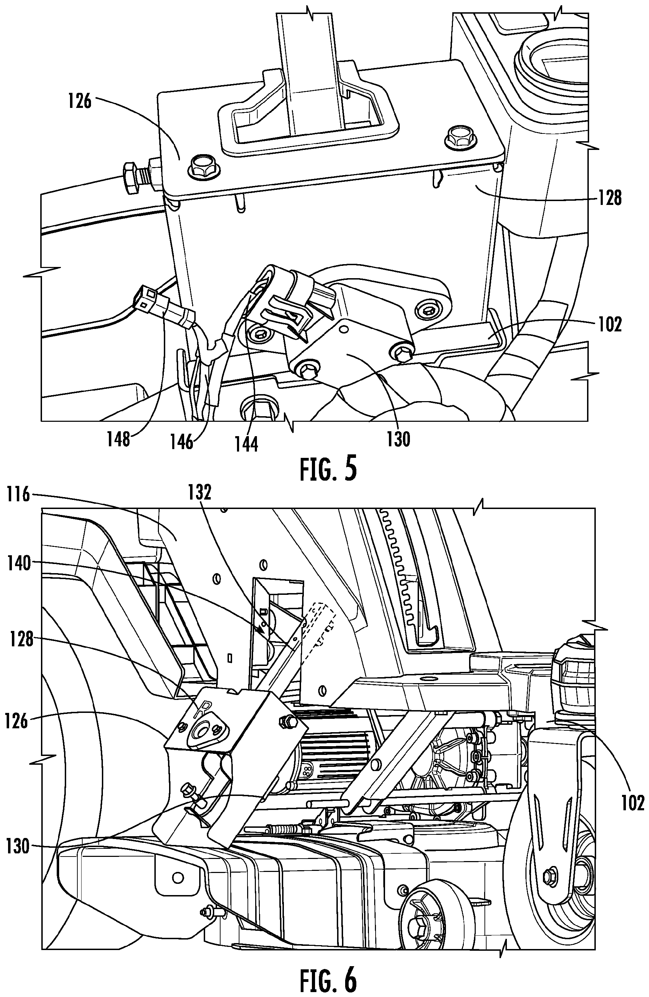

Referring initially to FIG. 1, the lap bars 114 can include a plurality of lap bars 114. Each of the lap bars 114 can be formed from an elongated member disposed in front of the seat 106. Typically, two lap bars 114 extend from a faring 116 of the lawnmower 100 and are accessible by a user (rider). The two lap bars 114 may include a left lap bar 118 and a right lap bar 120. In certain implementations, the left and right lap bars 118 and 120 are generally the same as one another. For instance, the left and right lap bars 118 and 120 may be reflectively symmetrical about a centerline of the lawnmower 100. The left and right lap bars 118 and 120 can each include a vertical portion 122 that extends from the faring 116 and a horizontal portion 124 that extends from the vertical portion 122 over the seat 106. The horizontal portion 124 of the left and right lap bars 118 and 120 may include a gripping surface, such as an overmolded rubber surface. The vertical portion 122 of each one of the left and right lap bars 118 and 120 may be coupled to a control subunit 126 (see, e.g., FIGS. 5 and 6). The left and right lap bars 118 and 120 can each include a separate control subunit 126.

As depicted in FIGS. 5 and 6, the control subunits 126 are each coupled to the frame 102 of the lawnmower 100. The control subunits 126 can each include a housing 128, a sensor 130 that detects a relative position of the respective lap bar 114 (e.g., forward displacement and rearward displacement of the lap bar 114), and hardware required to return the respective lap bar 114 to a neutral operating position (e.g., springs, dampers, or the like). In some instances, the control subunit 126 can include a lower arm 132 that extends from the housing 128 to interface with the lap bar 114. The lower arm 132 can be coupled to the housing 128 through a movable (e.g., pivotable) interface. The lap bar 114 can be coupled to the lower arm 132 to allow a user to manipulate the position of the lower arm 132 (and thus control operation of the lawnmower 100). As described in greater detail below, the lap bar 114 may be detachable from the lower arm 132, for example, when the user wants to convert the user input of the lawnmower 100. By removing the lap bar 114 from the lower arm 132, the control subunit 126 can be more easily removed from the lawnmower 100. By way of non-limiting example, the lap bar 114 can be removably coupled to the control subunit 126 by one or more threaded fasteners.

The user (rider) inputs controls to the left and right lap bars 118 and 120 by displacing one or both of the left and/or right lap bars 118 and/or 120 from a neutral (e.g., center) operating position. For example, the user can displace one of the left or right lap bars 118 or 120 in a forward or rearward direction while maintaining the other of the left or right lap bars 118 or 120 in the neutral position to turn the lawnmower 100. Alternatively, one of the left or right lap bars 118 or 120 can be displaced further than the other of the left or right lap bars 118 or 120 to turn the lawnmower 100. By displacing both the left and right lap bars 118 and 120 a same amount in the same direction, the lawnmower 100 can travel in a straight line in the current direction/heading. The further the left and right lap bars 118 and 120 are displaced from the neutral position, the faster the lawnmower 100 travels.

Relative displacement of the left and right lap bars 118 and 120 from their neutral positions is detected by the respective sensor 130 associated with each control subunit 126. Relative displacement of the left lap bar 118 is detected by the sensor 130 associated with the control subunit 126 of the left lap bar 118 and relative displacement of the right lap bar 120 is detected by the sensor 130 associated with the control subunit 126 of the right lap bar 120. By way of example, the sensors 130 can each include a hall effect sensor, a rotational encoder, an RFID sensor, a visual sensor, or the like. Information detected by the sensors 130 (such as angular displacement of the lap bars 118 or 120) is communicated to the controller 112. The controller 112 processes and/or analyzes the information and controls movement of the lawnmower 100 in response thereto, e.g., by adjusting speed of one or more of the motors 110 to affect wheel speed.

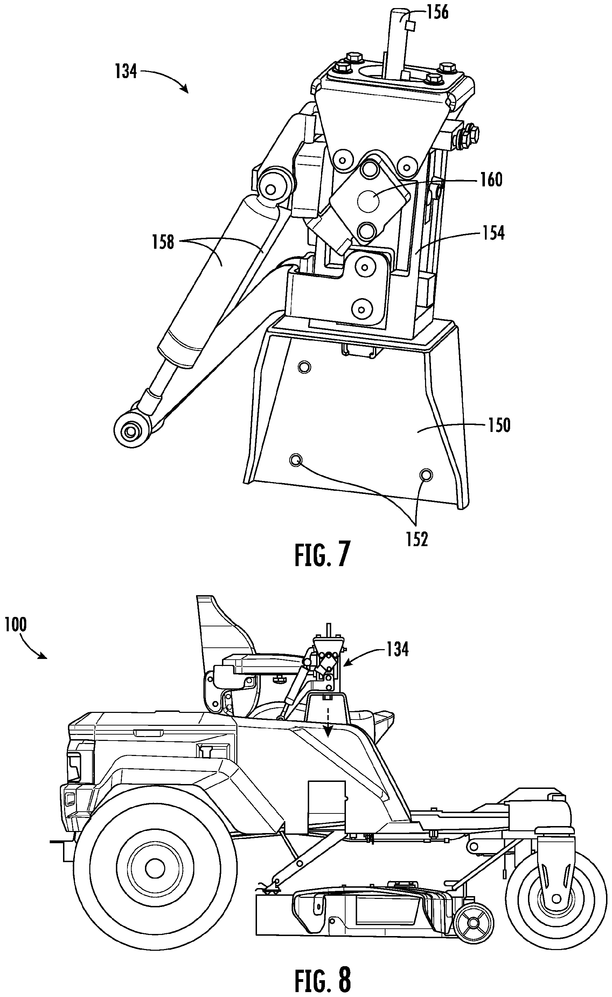

Referring to FIG. 2, joysticks 134 generally rely on user input at a single input location. Whereas the lap bar configuration depicted in FIG. 1 includes a dual input design with individual left and right control implements, the joystick configuration operates using a single input location. The joystick 134 may be pivotably displaced (e.g., in forward, backward, left, and right directions) and/or rotationally displaced (e.g., twisted about its longitudinal axis) by the user (rider) to input control instructions to the controller 112 which affect lawnmower 100 operation. In some implementations, the joystick 134 may further allow for translation, e.g., along the longitudinal axis. Displacement of the joystick 134 is detected by one or more sensors (e.g., a sensor 160 depicted in FIG. 7) and communicated to the controller 112. The controller 112 processes and/or analyzes the information and controls movement of the lawnmower 100 in response thereto, e.g., by adjusting speed of one or more of the motors 110 to affect wheel speed.

It is noted that while information received by the controller 112 from the lap bars 114 may be received from two separate sources (i.e., from the individual sensors 130 associated with each of the control subunits 126), information received by the controller 112 from the joystick 134 may be received from a single source (i.e., the sensor 160). As described in greater detail below, the lawnmower 100 may include features to allow for (intelligent) self-configuration in view of the installed user input. That is, for example, the lawnmower 100 can adapt to the user input present on the lawnmower 100 without software updates, use of adapters or different wire harnesses, or the like. In this regard, the controller 112 can self-configure between single-input (e.g., joystick) and multi-input (e.g., lap bar) user feedback.

In some instances, a user may want to convert the user inputs of the lawnmower 100, e.g., between two or more different user inputs. For example, some users may prefer lap bars 114 (FIG. 1) while other users prefer joysticks 134 (FIG. 2). As described in accordance with one or more embodiments below, the user can convert between different user inputs without having to manually reprogram the controller 112 and without rewiring the lawnmower 100, thereby making the conversion between different user inputs easier and more user friendly. For example, the user can convert existing lap bars 114 to the joystick 134 or existing joystick 134 to the lap bars 114 and simply connect the wiring harness associated with the lap bar 114 or joystick 134 to the controller 112. The controller 112 can automatically detect which type of user input is present and self-configure to accommodate that type of user input. While the following description relates to conversion from lap bars 114 to the joystick 134, it should be understood that the described process is one example and that switching (converting) between other types of user inputs are possible, including converting from the joystick 134 to the lap bars 114.

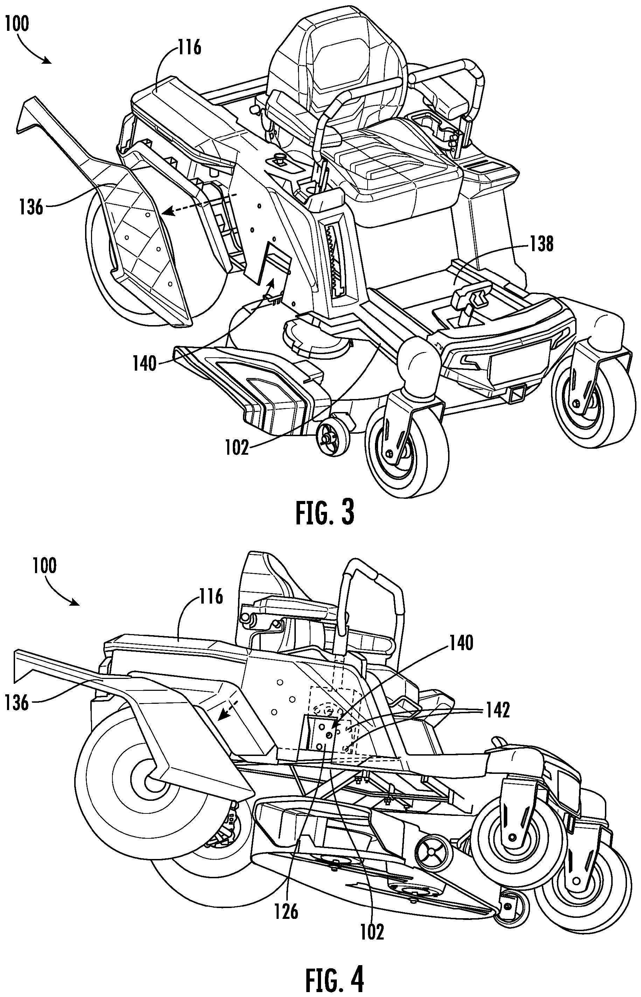

In some embodiments, converting between different types of user inputs begins by first accessing one or more portions of the existing user input. FIG. 3 illustrates the lawnmower 100 as seen with a portion 136 of the faring 116 removed. In an embodiment, the portion 136 of the faring 116 is a wheel faring disposed on a lateral side of the lawnmower 100. However, the portion 136 of the faring 116 may alternatively, or additionally, include a portion of the seat 106 or seat supporting structure, a portion of a floor 138, a portion of the frame 102, or another portion of the lawnmower 100. The portion 136 of the faring 116 can be removed by pulling on the portion 136, e.g., in a direction away from the frame 102. In some instances, the portion 136 can be secured to the frame 102 (or another portion of the lawnmower 100) by one or more fasteners. In other instances, the portion 136 can be secured to the frame 102 (or another portion of the lawnmower 100) by a snap fit, an interference fit, or through another type of connection. In some implementations, the portion 136 can be supported by a hinge which allows the portion 136 to be rotated between open and closed positions. In some implementations, the portion 136 can be configured on tracks which allow the portion 136 to slide between open and closed positions. The tracks may be integrated into the frame, the faring 116, or another portion of the lawnmower 100. When engaged with the lawnmower 100, the portion 136 of the faring 116 may restrict access to the user input. For example, the lawnmower 100 can define an opening 140 which is selectively covered by the portion 136 of the faring 116. After the portion 136 of the faring 116 is removed, the user has access to the opening 140 and can operate on, so as to remove, the user input from the lawnmower 100.

FIG. 4 depicts the lawnmower 100 as seen with the portion 136 of the faring 116 removed to illustrate the control subunit 126 disposed within a cavity of the faring 116. The user can access and operate on the control subunit 126 through the opening 140. The control subunit 126 can be coupled to the frame 102 through one or more fasteners, such as one or more threaded fasteners 142. Reaching a tool through the opening 140, the user can remove the one or more fasteners to disconnect the control subunit 126 from the frame 102. For instance, the user can insert a tool, such as a wrench or screwdriver, through the opening 140 and disengage the threaded fasteners 142. In an embodiment, all of the fasteners that secure the control subunit 126 to the frame 102 can be accessed through the opening 140. The fasteners can all be arranged to have the same relative orientation as one another. For example, all of the fasteners can be threaded along parallel axis. The opening 140 can be sized and/or shaped such that the user can insert the tool through the opening 140 in a direction parallel with the axis to engage heads of the fasteners. In this regard, the user can easily align and configure the tool with the fasteners from an appropriate angle, thus allowing the user to apply necessary torque to the tool without slipping from the head of the fastener while applying torque. In an embodiment, the opening 140 can define an edge with one or more concave segments. Each concave segment can align with a respective fastener such that the tool can extend through the concave segment to reach the fastener while the tool remains parallel to the axis of the fastener. In yet other embodiments, the concave segment can include an aperture spaced apart from the opening 140 to correspond to a respective fastener. Once all of the threaded fasteners 142 are unlocked (e.g., unthreaded), the control subunit 126 can be removed from the lawnmower 100.

FIG. 5 illustrates the control subunit 126 as seen coupled to the frame 102. The sensor 130 of the control subunit 126 is coupled to the housing 128 of the control subunit 126. By way of example, the sensor 130 can include a rotational encoder, a hall effect sensor, or the like. A wiring harness 144 associated with the control subunit 126 transmits signals, e.g., from the sensor 130, to the controller 112 (FIG. 1) through a wiring harness 146 of the lawnmower 100. Prior to removing the control subunit 126 from the lawnmower 100 (i.e., prior to removing the threaded fasteners 142 or after removing the threaded fasteners 142), the wiring harness 144 can be disconnected from a connector 148 associated with the wiring harness 146 of the lawnmower 100. The control subunit 126 is then ready to be removed from the lawnmower 100.

FIG. 6 illustrates the control subunit 126 as it is removed from the lawnmower 100 in accordance with an embodiment. In an embodiment, the control subunit 126, or a portion of the control subunit 126, is removed from the lawnmower 100 by passing the control subunit 126, or a portion of the control subunit 126, through the opening 140. In an embodiment, the user can uncouple the vertical portion 122 of the lap bar 114 from the lower arm 132 of the control subunit 126 prior to removing the control subunit 126 from the lawnmower 100. With the lap bar 114 disconnected from the control subunit 126, the control subunit 126 can more easily be maneuvered through (removed from) the lawnmower 100. Removing the control subunit 126 from the lawnmower 100 can include, for example, rotating the control subunit 126 about a forward/rearward axis and translating the control subunit 126 through the opening 140. In some implementations, rotation occurs prior to translation. In other implementations, translation occurs prior to rotation. In other implementations, rotation and translation of the control subunit 126 occur at substantially the same time. The roto-translational movement of the control subunit 126 allows the user to remove the control subunit 126 while not impacting the mowing deck and avoiding hardware and components like motors, support brackets, and the like. The cavity in which the control subunit 126 resides can be shaped to allow for the roto-translational movement. For example, the cavity defined by the faring 116 and/or frame 102 can include one or more guide surfaces which support the control subunit 126 in a particular motion profile as the control subunit 126 is removed from the lawnmower 100.

Referring again to FIG. 4, in an embodiment, the frame 102 can form a lateral and/or lower support surface which restricts movement of the control subunit 126. For example, the frame 102 can form a lateral shoulder which impedes lateral movement of the control subunit 126 after the fasteners are removed. As such, the control subunit 126 is not easily removed from the lawnmower 100 and cannot fall on the user during the retrofitting operation. To overcome the lateral shoulder, the user must first lift the control subunit 126 over the lateral shoulder and then translate the control subunit 126 over an upper surface of the lateral shoulder. After passing the lateral shoulder, the control subunit is then lowered to fit through the opening 140. Similarly, the lower support surface can include a floor on which the control subunit 126 can rest. In this regard, the user can undo the fasteners without having to support a weight of the control subunit 126.

FIG. 7 illustrates the joystick 134 in accordance with an example embodiment. The joystick 134 generally includes a mounting bracket 150. The mounting bracket 150 includes engagement features, such as openings 152, configured to be aligned with corresponding engagement features, e.g., openings, in the frame 102 of the lawnmower 100 (or another portion of the lawnmower 100) and secured to the frame 102 via the threaded fasteners 142 (FIG. 4). A body 154 is coupled to the mounting bracket 150 and supports a joystick actuator 156 which is movable by a user to control movement of the lawnmower 100. The joystick actuator 156 can be supported by a damping system 158 including, for example, one or more hydraulic dampeners, springs, or the like. The damping system 158 is configured to dampen noise, vibration, and harshness (NVH) from the joystick actuator 156 to improve user experience. The damping system 158 is self-contained by the joystick 134 such that the damping system 158 is not directly coupled to the frame 102 of the lawnmower 100. Instead, the damping system 158 uses the mounting bracket 150 and/or body 154 against which to dampen. In this regard, installation of the joystick 134 to the lawnmower 100 can be performed more easily without the user having to manually attach the damping system 158 to the frame 102.

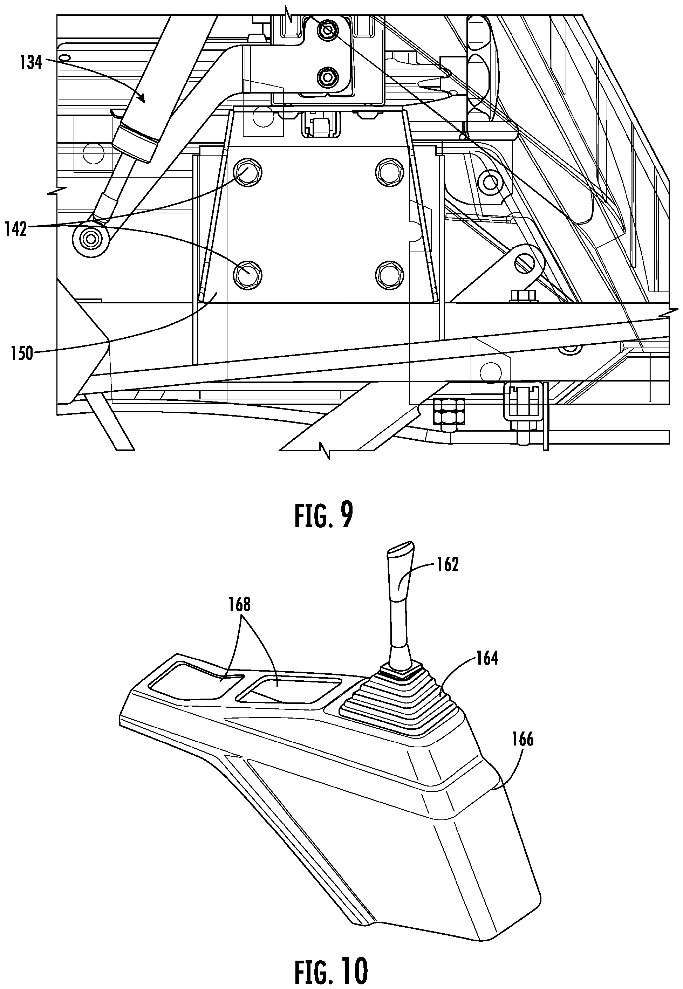

In some implementations, a user graspable element 162 (FIG. 10) is coupled to the joystick actuator 156. The user graspable element 162 can extend through a boot 164, such as a rubber boot, that prevents ingress of debris into locations associated with functional components of the joystick 134. The boot 164 can be coupled to a faring 166. The faring 166 may be coupled to the lawnmower 100, e.g., after the joystick 134 is coupled to the frame 102 and the sensor 160 is coupled to the main wiring 146 (e.g., through a wiring harness). The faring 166 can define one or more cutouts 168. The cutouts 168 can receive one or more user controls 170 (FIG. 2). By way of example, the one or more user controls 170 can include physical buttons, such as levers, switches, dials, knobs or other types of manual controllers; displays, such as LCD displays, OLED displays, LED displays, analog displays, or the like; ignition switches; or the like. In some instances, the one or more user controls 170 can be part of the lawnmower 100 when the lap bars 114 are present and the faring 166 can provide aesthetic cover for those existing components. In other instances, the one or more user controls 170 can be added to the lawnmower 100, e.g., when the lawnmower 100 is converted to operate using the joystick 134. Where the one or more user controls 170 are added to the lawnmower 100 during conversion to the joystick 134, the one or more user controls 170 can be coupled to the main wiring 146 at the same, or similar, time that the sensor 160 is coupled to the main wiring 146.

In an embodiment, the different types of user inputs are introduced and/or removed from the lawnmower 100 through a plurality of different pathways, each pathway being associated with (specific to) at least one of the user inputs. For example, referring to FIG. 8, the joystick 134 can be moved into position with respect to the lawnmower 100 along a different path than taken to remove the lap bar control subunit 126 from the lawnmower 100. For instance, the joystick 134 can be lowered into the opening through which the vertical portion 122 of the lap bar 114 previously extended while the lap bar control subunit 126 is removed, e.g., from below the faring 116 and/or through the opening 140.

One or more sensors 160 are coupled to the joystick 134 and detect a relative position of the joystick actuator 156. After positioning (or during positioning of) the joystick 134, the sensor(s) 160 can be coupled to the main wiring 146 to electronically connect the sensor(s) 160 to the controller 112.

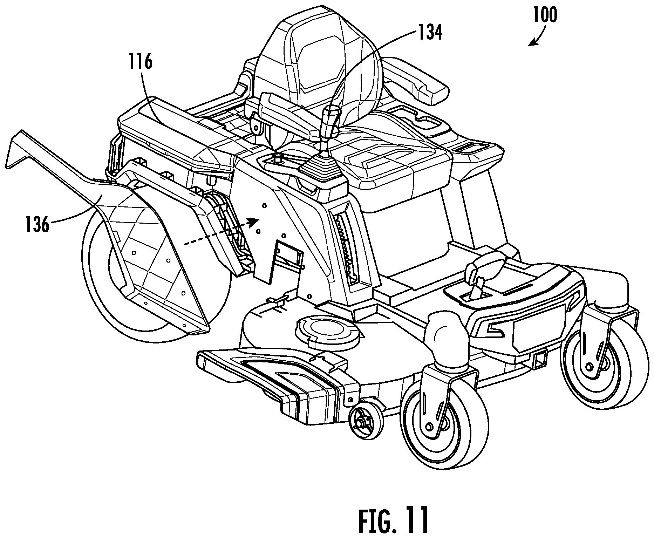

As depicted in FIG. 11, the portion 136 of the faring 116 can be recoupled to the lawnmower 100. The lawnmower 100 is then ready to operate.

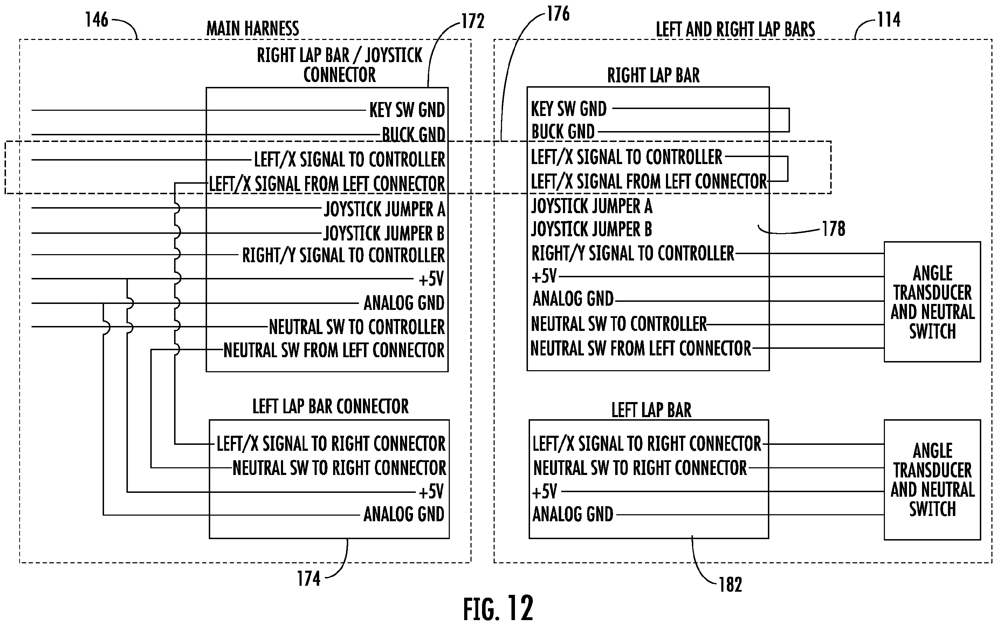

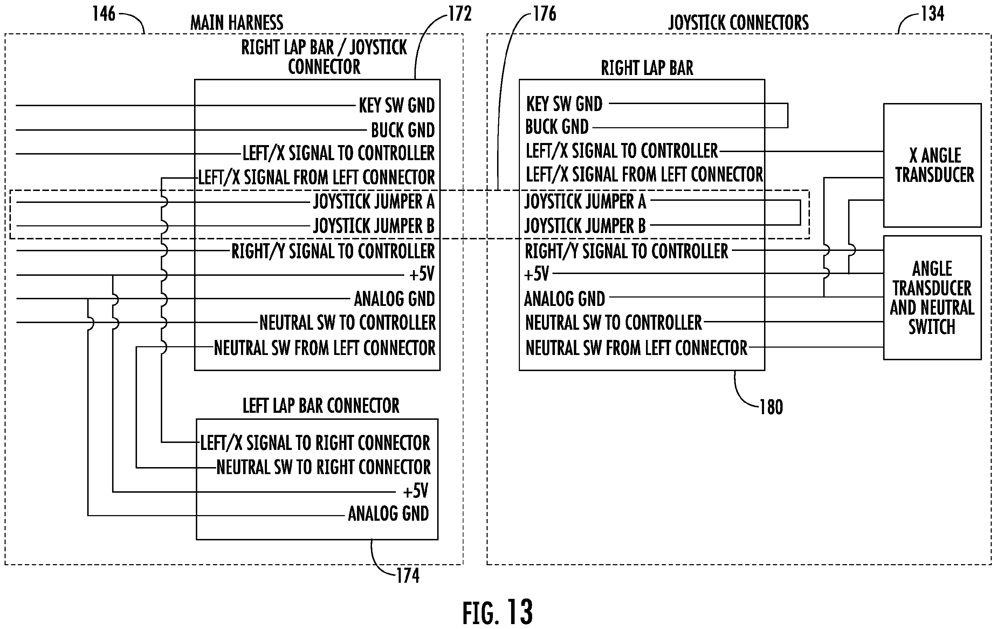

FIGS. 12 and 13 illustrate example connection interfaces between the main wiring 146 of the lawnmower 100 and the steering control. In particular, FIG. 12 illustrates a connection interface between the main wiring 146 of the lawnmower 100 and the wiring harness 144 of the lap bars 114 and FIG. 13 illustrates a connection interface between the main wiring 146 of the lawnmower 100 and the harness 144 of the joystick 134. The main wiring 146 of the lawnmower 100 is the same in both FIGS. 12 and 13, i.e., the main wiring 146 remains unchanged regardless of the type of user input coupled therewith.

The main wiring 146 of the lawnmower 100 includes a first connector 172 and a second connector 174. In some instances, the first and second connectors 172 and 174 can each include a discrete (separate) connector body. In other instances, the first and second connectors 172 and 174 can be part of a same connector body that receives separate inputs from the left and right lap bars 118 and 120 or receives a common input from the left and right lap bars 118 and 120. The first connector 172 is configured to be connected with one of the left or right lap bars 118 or 120. For example, the first connector 172 can be associated with the right lap bar 120 (including the control subunit 126 associated with the right lap bar 120). The second connector 174 can be connected with the other one of the left or right lap bars 118 or 120. For example, the second connector 174 can be associated with the left lap bar 118 (including the control subunit 126 associated with the left lap bar 118).

When the wiring harness 144 associated with the lap bars 114 is coupled to the main wiring 146, the first connector 172 can communicate with (e.g., receive information from) the right lap bar 120 and the second connector 174 can communicate with (e.g., receive information from) the left lap bar 118. Referring to FIG. 13, when the lap bar 114 is replaced by the joystick 134, the first connector 172 can communicate with the joystick 134 and the second connector 174 may not communicate with any portion of the joystick 134. In this regard, the first connector 172 can connect to both the lap bar 114 and the joystick 135 while the second connector 174 only connects to the lap bar 114. The main wiring 146 can include enough connectors (e.g., connectors 172, 174, etc.) to engage with the largest of user inputs, i.e., the user input having the most connection requirements. For instance, the main wiring 146 can include three connectors, four connectors, five connectors, etc. The main wiring 146 can be configured such that user inputs with fewer connectors still functionally operate with the main wiring 146 while requiring less than all available connectors of the main wiring 146.

In certain instances, it may be desirable to prevent the lawnmower 100 from operating (e.g., turning on, moving, driving a cutting implement, etc.) when the user input is absent, e.g., when the user input is removed or when the user input is being replaced. To prevent the lawnmower 100 from operating while the user input is absent, the first connector 172 can include a jumper 176 in series with a key switch of the lawnmower 100. The jumper 176 forms a closed circuit when a connector 178 associated with the wiring harness 144 of the right lap bar 120 is present and coupled to the first connector 172. However, the jumper 176 forms a broken circuit when the connector 178 associated with the wiring harness 144 of the right lap bar 120 is absent (i.e., disconnected from the first connector 172). Presence of the jumper 176 in series with the key switch prevents the lawnmower 100 from powering on when the jumper 176 forms a broken circuit. As depicted in FIG. 13, the circuit formed by the jumper 176 can also be closed in the presence of the joystick 134, i.e., when a connector 180 associated with the wiring harness 144 of the joystick 134 is present and coupled to the first connector 172. However, when neither the right lap bar 120 (i.e., the lap bars 114) nor the joystick 134 are coupled to the first connector 172, the lawnmower 100 is prevented from powering on in view of the brocket circuit at jumper 176. While the above description is made with specific reference to the right lap bar 120, it is noted that the features described may be operate instead, or in addition, at the left lap bar 118.

In some instances, it may be desirable to prevent concurrent use of multiple different user inputs. For example, it may be desirable to prevent the lawnmower 100 from operating while both the lap bar 114 and the joystick 134 (or a portion of both) are present and connected. There may be instances where the right lap bar 120 is already replaced by the joystick 134 and the joystick 134 is coupled to the first connector 172, however the left lap bar 118 is still coupled to the lawnmower 100 with the wiring harness 144 associated with the left lap bar 118 still coupled to the main wiring 146 of the lawnmower 100. To prevent concurrent use of the different steering controls, the left control signal from the first connector 172 may be fed through the second connector 174. Accordingly, signals from the left lap bar 118 are relayed on a broken circuit (due to the disconnected right lap bar 120) and thus are not communicated to the controller 112.

In some instances, it may be desirable for the controller 112 to be able to automatically detect the type of steering control coupled to the lawnmower 100. The first connector 172 and the wiring harness 144 for the joystick 134 can include a joystick jumper circuit 176 that is closed only when the joystick 134 is present and coupled to the main wiring 146. This circuit 176 is not present in the right lap bar 120 and thus cannot be closed when the right lap bar 120 is present instead of the joystick 134. It should be understood that other types of steering controls (e.g., steering wheels, pedals, or the like) can include their own circuits that, when closed, indicate to the controller 112 the presence of that particular type of steering control.

In some instances, it may be desirable to prevent a user from accidently coupling the steering control to the main wiring 146 in an incorrect manner. For example, it may be desirable to prevent the user from installing the left lap bar 118 on the right side of the lawnmower 100 and the right lap bar 120 on the left side of the lawnmower 100. To prevent incorrect installation, the right lap bar connector 178 and a left lap bar connector 182 can have different pin counts and/or different physical layouts that are not compatible with one another. In this regard, the user cannot accidently switch the installation of the left and right lap bars 118 and 120 without preventing coupling the wiring harnesses 144 to the main wiring 146 of the lawnmower 100.

Further aspects of the invention are provided by one or more of the following embodiments:
Embodiment 1. A riding lawnmower comprising: a frame; a seat supported by the frame; a cutting implement supported by the frame, the cutting implement driven by a cutting implement motor; a wheel rotatably driven by a wheel motor; a controller in electrical communication with the wheel motor to control operation of the wheel motor; a wiring harness defining a user input connector, wherein the wiring harness is in electrical communication with the controller; a user input movable in at least one direction, wherein the user input receives input from a user to affect steering control of the riding lawnmower, wherein the user input is swappable between at least two different types of user inputs, and wherein the controller is configured to self-configure between the at least two different types of user inputs.
Embodiment 2. The riding lawnmower of embodiment 1, wherein the controller automatically detects the type of the user input using a jumper circuit, wherein connection of at least one of the user inputs causes the jumper circuit to close, and wherein connection of at least another one of the user inputs causes the jumper circuit to remain open.
Embodiment 3. The riding lawnmower of any one of claims 1 or 2, wherein the user input comprises a left lap bar and a right lap bar, wherein connectors of the left lap bar and right lap bar include different pin counts, different physical layouts, or both, wherein the user input connector comprises a left user input connector and a right user input connector, and wherein each connector of the left and right user inputs has a same pin count and a same physical layout as compared to a respective one of the connectors of the left and right lap bars.
Embodiment 4. The riding lawnmower of any one of claims 1-3, wherein the at least two different types of user inputs are installed on the lawnmower through different pathways.
Embodiment 5. The riding lawnmower of embodiment 4, wherein the user input is selectable between a first user input and a second user input, wherein the first user input is installed from a top side of the lawnmower, and wherein the second user input is installed from a bottom side of the lawnmower.
Embodiment 6. The riding lawnmower of any one of claims 1-5, wherein the lawnmower further comprises an opening through which the user input is movable to install and remove the user input from the lawnmower, and wherein the opening is covered by a removable faring.
Embodiment 7. The riding lawnmower of any one of claims 1-6, wherein the user input comprises a damping system, and wherein the damping system is integrated into the user input such that the damping system is self-contained by the user input.
Embodiment 8. The riding lawnmower of claim 1, wherein the controller is configured to self-configure based on a connector type of the user input received at the user input connector.
Embodiment 9. A method of retrofitting a lawnmower between a plurality of different user inputs, the method comprising: removing a cover of the lawnmower to expose an opening such that an existing user input currently coupled to the lawnmower is accessible through the opening; physically uncoupling the existing user input from the lawnmower; electrically uncoupling a connector of the existing user input from a user input connector associated with a wire harness of the lawnmower; physically coupling a new user input to the lawnmower; and electrically coupling the new user input to the lawnmower by connecting a connector of the new user input to the user input connector.
Embodiment 10. The method of embodiment 9, wherein a controller of the lawnmower is configured to self-configure from a configuration associated with the existing user input to a configuration associated with the new user input in response to electrically coupling the new user input to the lawnmower.
Embodiment 11. The method of any one of claims 9 or 10, wherein physically uncoupling the existing user input is performed by moving the existing user input through a first pathway, and wherein physically coupling the new user input to the lawnmower is performed by moving the new user input through a second pathway not associated with the first pathway.
Embodiment 12. The method of embodiment 11, wherein the first pathway is associated with the opening, and wherein the second pathway is not associated with the opening.
Embodiment 13. The method of any one of claims 9-12, wherein physically uncoupling the existing user input comprises extending a tool through the opening to engage with a plurality of fasteners, and wherein the opening is sized and shaped to permit parallel tool orientation with each of the plurality of fasteners.
Embodiment 14. The method of any one of claims 9-13, wherein one of the existing user input and the new user input is a lap bar, and wherein the other of the existing user input and the new user input is a joystick.
Embodiment 15. A plurality of swappable user inputs each configured to be separately coupled to a riding lawnmower to affect steering control of the riding lawnmower, wherein the plurality of swappable user inputs comprises at least two different types of user inputs, and wherein each of the plurality of swappable user inputs comprises: an engagement feature to removably secure the user input to the riding lawnmower; a control implement which receives an input from a user riding on the riding lawnmower; a sensor that detects a state of the control implement; and a connector in electrical communication with the sensor to transmit detected information from the sensor to a wiring harness of the riding lawnmower, wherein the connector is configured to be removably installable at the wiring harness, and wherein each of the different types of user inputs has a different type of connector such that a controller of the riding lawnmower is able to self-configure to control the riding lawnmower based on the connector type installed at the wiring harness.
Embodiment 16. The plurality of swappable user inputs of embodiment 15, wherein at least one of the plurality of swappable user inputs comprises a self-contained damping system.
Embodiment 17. The plurality of swappable user inputs of any one of claims 15 or 16, wherein the connectors of each of the different types of user inputs is compatible with a single user input connector associated with the wiring harness.
Embodiment 18. The plurality of swappable user inputs of any one of claims 15-17, wherein at least one of the swappable user inputs comprises a single control implement, wherein at least one of the swappable user inputs comprises a plurality of control implements.
Embodiment 19. The plurality of swappable user inputs of any one of claims 15-18, wherein at least one of the swappable user inputs comprises a lap bar, and wherein at least one of the swappable user inputs comprises a joystick.
Embodiment 20. The plurality of swappable user inputs of any one of claims 15-19, wherein at least one of the swappable user inputs is configured to be installed from below the riding lawnmower, and wherein at least one of the swappable user inputs is configured to be installed from above the riding lawnmower.

The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A riding lawnmower comprising:
a frame;
a seat supported by the frame;
a cutting implement supported by the frame, the cutting implement driven by a cutting implement motor;
a wheel rotatably driven by a wheel motor;
a controller in electrical communication with the wheel motor to control operation of the wheel motor;
a wiring harness defining a user input connector, wherein the wiring harness is in electrical communication with the controller;
a user input movable in at least one direction, wherein the user input receives input from a user to affect steering control of the lawnmower,
wherein the user input is swappable between at least two different types of user inputs, and wherein the controller is configured to self-configure between the at least two different types of user inputs.

2. The riding lawnmower of claim 1, wherein the controller automatically detects the type of the user input using a jumper circuit, wherein connection of at least one of the user inputs causes the jumper circuit to close, and wherein connection of at least another one of the user inputs causes the jumper circuit to remain open.

3. The riding lawnmower of any one of claims 1 or 2, wherein the user input comprises a left lap bar and a right lap bar, wherein connectors of the left lap bar and right lap bar include different pin counts, different physical layouts, or both, wherein the user input connector comprises a left user input connector and a right user input connector, and wherein each connector of the left and right user inputs has a same pin count and a same physical layout as compared to a respective one of the connectors of the left and right lap bars.

4. The riding lawnmower of any one of claims 1 to 3, wherein the at least two different types of user inputs are installed on the lawnmower through different pathways.

5. The riding lawnmower of claim 4, wherein the user input is selectable between a first user input and a second user input, wherein the first user input is installed from a top side of the lawnmower in a downward direction, and wherein the second user input is installed from a bottom side of the lawnmower in an upward direction.

6. The riding lawnmower of any one of claims 1 to 5, wherein the lawnmower further comprises an opening through which the user input is movable to install and remove the user input from the lawnmower, and wherein the opening is covered by a removable faring.

7. The riding lawnmower of any one of claims 1 to 6, wherein the user input comprises a damping system, and wherein the damping system is integrated into the user input such that the damping system is self-contained by the user input.

8. The riding lawnmower of any one of claims 1 to 7, wherein the controller is configured to self-configure based on a connector type of the user input received at the user input connector.

9. A method of retrofitting the riding lawnmower of claim 1 between a plurality of different user inputs, the method comprising:
removing a cover of the lawnmower to expose an opening such that an existing user input currently coupled to the lawnmower is accessible through the opening;
physically uncoupling the existing user input from the lawnmower;
electrically uncoupling a connector of the existing user input from the user input connector;
physically coupling a new user input to the lawnmower; and
electrically coupling the new user input to the lawnmower by connecting a connector of the new user input to the user input connector.

10. The method of claim 9, wherein the controller is configured to self-configure from a first configuration associated with the existing user input to a second configuration associated with the new user input in response to electrically coupling the new user input to the lawnmower.

11. The method of any one of claims 9 or 10, wherein physically uncoupling the existing user input is performed by moving the existing user input through a first pathway, and wherein physically coupling the new user input to the lawnmower is performed by moving the new user input through a second pathway not associated with the first pathway.

12. The method of claim 11, wherein the first pathway is associated with the opening, and wherein the second pathway is not associated with the opening.

13. The method of any one of claims 9 to 12, wherein physically uncoupling the existing user input comprises extending a tool through the opening to engage with a plurality of fasteners coupling the existing user input to the lawnmower, and wherein the opening is sized and shaped to permit parallel tool orientation with each of the plurality of fasteners.

14. The method of any one of claims 9 to 12, wherein one of the existing user input and the new user input is a lap bar, and wherein the other of the existing user input and the new user input is a joystick.

15. The method of any one of claims 9 to 12, wherein at least one of the existing user input and the new user input comprises a self-contained damping system.
